# EUROPÄISCHE PATENTSCHRIFT

(11) **EP 1 317 009 B1**
(45) Veröffentlichungstag und Bekanntmachung des Hinweises auf die Patenterteilung: **16.02.2005**
(21) Anmeldenummer: 02026489.1
(22) Anmeldetag: 28.11.2002
(51) Int. Cl.: H01M 8/02, B29C 45/18, B29C 45/03, B29C 45/46, B29C 45/00, B29C 45/60

(54) **Verfahren zur Herstellung von Elektrodenplatten durch Spritzgiessen aus mit Graphit od.dgl. beladenem Kunststoff**
Method for manufacturing electrode plates by injection moulding of graphite or the like loaded with plastic
Méthode de fabrication de plaques d'électrodes par moulage par injection de graphite ou analogues comprenant du plastique

(30) Priorität: 01.12.2001 DE 10159116
(43) Veröffentlichungstag der Anmeldung: 04.06.2003
(73) Patentinhaber: Krauss-Maffei Kunststofftechnik GmbH, 80997 München (DE)
(72) Erfinder: Hunold, Dietrich, 80839 München (DE)
(74) Vertreter: Wilhelm, Ludwig, Dipl.-Phys.

(56) Entgegenhaltungen:
- EP-A- 1 118 442
- WO-A-00/30203
- DE-A- 4 421 117
- DE-C- 4 314 745

## Beschreibung

Die Erfindung betrifft ein Verfahren zur Herstellung von Elektrodenkörpern, insbesondere sogenannten Bipolarplatten für Brennstoffzellen, durch Spritzgießen aus Kunststoff, der durch Zusatz von Graphit od. dgl. eine hohe elektrische Leitfähigkeit besitzt.

In verschiedenen Bereichen der Technik werden Elektroden benötigt, die neben einer hohen elektrischen Leitfähigkeit eine gute Beständigkeit gegen aggressive Medien aufweisen müssen. Ein besonders aktuelles Anwendungsgebiet sind Brennstoffzellen, in denen den platten- oder membranförmigen Elektroden, die auch als Bipolarplatten bezeichnet werden, zusätzlich zu der Stromleitung auch noch die Aufgabe der fein verteilten Zu- und Abführung der an der Reaktion in der Brennstoffzelle beteiligten flüssigen und gasförmigen Bestandteile zukommt. Dieser Funktion entsprechend haben die Bipolarplatten eine komplizierte Formgebung mit zahlreichen kleinen Strömungskanälen.

Solche Elektrodenplatten für Brennstoffzellen, die aus Kunststoff mit einem mehr oder weniger hohen Anteil an leitfähigem Pulver wie insbesondere Kohle oder Graphit gemischt sind, sind in DE 43 14 745 C1, US 7,533,678 und WO 00/30202 beschrieben. Diese Druckschriften erwähnen auch das Herstellen solcher Elektrodenplatten durch Spritzgießen, ohne aber konkrete Bedingungen des Spritzgießverfahrens im Detail anzugeben. WO 00/30203 beschreibt ein Verfahren zur Herstellung von Elektrodenplatten für Brennstoffzellen durch Spritzgießen, bei dem eine Mischung aus polymerem Kunststoff und Graphitpulver kompoundiert, extrudiert und pelletisiert wird und aus dem so gewonnen Ausgangsmaterial durch Spritzgießen die Elektrodenplatten hergestellt werden. Es werden zahlreiche bevorzugte Verfahrensbedingungen für die Durchführung des Spritzgießverfahrens angegeben.

Es wurde gefunden, daß das Spritzgießen von Elektrodenplatten aus mit Graphit od. dgl. gefülltem Kunststoff besondere Probleme bereitet, wenn das Material einen sehr hohen Anteil an Graphitpulver od. dgl., z. B. mehr als 80 Gew.-% enthält, wie es im Interesse einer hohen Leitfähigkeit der Elektrodenplatte, und damit eines guten Wirkungsgrades der Brennstoffzelle, erwünscht ist. Ein Compoundmaterial mit einem zu hohen Anteil an Graphitpulver od. dgl. bereitet bei der Verarbeitung erhebliche Schwierigkeiten, da es nicht rieselfähig, sondern breiig mit sehr hoher Viskosität ist und in sehr starkem Maße zu Brückenbildungen an Querschnittsverengungen der Verarbeitungsapparatur neigt.

Der Erfindung liegt die Aufgabe zugrunde, Verfahrensbedingungen anzugeben, mit denen auch derartiges problematisches Material mit einem extrem hohen Verhältnis des Füllers zum Binder verarbeitet werden kann.

Gegenstand der Erfindung ist ein Verfahren zum Herstellen von leitfähigen plattenförmigen Elektroden, insbesondere Bipolarplatten für Brennstoffzellen, durch Spritzgießen aus einem Compoundmaterial, das aus einem thermoplastischen oder duroplastischen Kunststoff als Binder und einem leitfähigen Pulver, insbesondere Graphit, Koks od. dgl. als Füller, besteht, mittels einer Spritzgießvorrichtung mit Plastifizierschnecke, wobei das Verfahren im wesentlichen durch die folgenden Merkmale gekennzeichnet ist:
- der Anteil des leitfähigen Pulvers in dem Compoundmaterial beträgt mindestens 80 Gew.-%;
- die Plastifizierschnecke gibt das plastifizierte Material durch eine Düse ab, deren Länge weniger als 15 mm beträgt;
- das Spritzgießen erfolgt mit einer Spritzgießvorrichtung, bei der auf dem gesamten Strömungsweg von der Materialzuführung bis zur Spritzgießform jede einzelne Querschnittsverjüngung eine Querschnittsabnahme von nicht mehr als 10:1 vorzugsweise nicht mehr als 5:1, aufweist.

Vorzugsweise erfolgt die Materialzuführung zur Plastifizierschnecke durch einen Zwangsförderer in Form eines Schneckenförderers mit rotierendem Trichter, wie in DE 44 21 117 C2 sowie in "Kunststoffe", 90. Jahrgang 2000, Heft 3 beschrieben. Auf diese Schriften wird in vollem Umfang Bezug genommen. Der Schneckenstopfer hat eine kompressionslose Förderschnecke mit großer Gangtiefe, vorzugsweise einer Gangtiefe, die mindestens ein Viertel des Schneckendurchmessers beträgt.

Das Material wird der Plastifizierschnecke vorzugsweise mit solcher Dosierung zugeführt, daß deren Volumen zu nicht mehr als 90 %, vorzugsweise nicht mehr als 80 %, gefüllt wird. Diese Dosierung der Materialzuführung derart, daß die Plastifizierschnecke nicht komplett, sondern nur zu ca. 80 % gefüllt wird, erfolgt über eine Dosiervorrichtung, z. B. eine Bandwaage.

Aufgrund des hohen Graphitanteils des zu verarbeitenden Materials sollte das Kompressionsverhältnis der Plastifizierschnecke nicht sehr groß sein. Es sollte bei thermoplastischem Kunststoff nicht größer als 1,6:1 sein und im Falle von Duroplasten zwischen 1:1,2 und 1:1 liegen.

Auch für die Plastifizierschnecke ist eine vergrößerte Gangtiefe günstig. Diese beträgt erfindungsgemäß mindestens ein Achtel, vorzugsweise mindestens ein Viertel des Durchmessers der Schnecke. Es wurde ferner gefunden, daß im Hinblick auf die speziellen Fließeigenschaften von Graphit ein negativer Winkel der treibenden Flanke der Plastifizierschnecke vorteilhaft ist. Ferner sollte die Gangsteigung der Plastifizierschnecke zwischen 0,5 und 1 liegen.

Um eine zu starke Rückströmung des Materials in der Plastifizierschnecke zu vermeiden, sollte entweder eine Rückstromsperre eingesetzt werden, die im Hinblick auf die speziellen Materialeigenschaften einen extrem großen Strömungsquerschnitt haben muß, oder es kann eine Trennung von Plastifizierung und Einspritzung mit zwischengeschaltetem Ventil sinnvoll sein, wobei die Einspritzung dann über einen Einspritzkolben (Schotpott) erfolgt.

Die Formgebung der Elektrodenplatten kann entweder durch Spritzgießen im klassischen Sinne oder aber durch sogenanntes Spritzprägen erfolgen.

Es wurde gefunden, daß spritzgegossene Teile aus Kunststoff mit hohem Graphitanteil dazu neigen, an der Oberfläche eine graphitarme Schicht auszubilden. Dies beeinträchtigt die Leitfähigkeit der Elektrodenplatten. Es ist deshalb vorteilhaft, die spritzgegossenen Erzeugnisse durch Sandstrahlen zu bearbeiten, um diese Oberflächenschicht zu entfernen und die Leitfähigkeit dadurch zu verbessern. Weiterhin ist es denkbar, durch nachgeschaltete Temperaturbehandlung mit Tempern oder Sintern die Eigenschaften der spritzgegossenen Erzeugnisse zu verbessern.

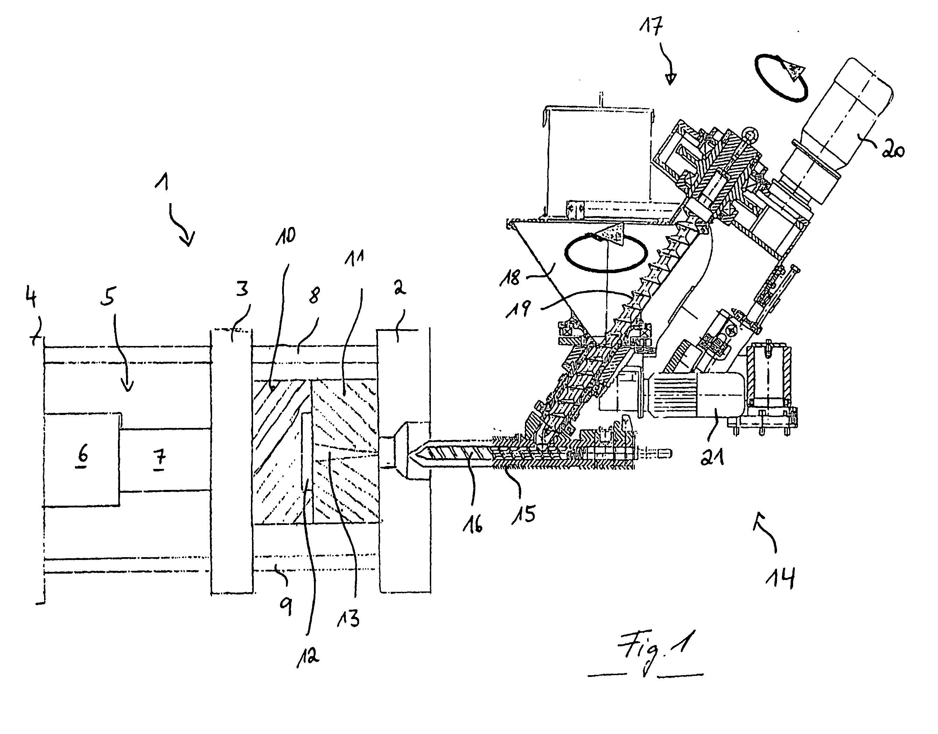

Figur 1 zeigt eine Spritzgießmaschine, die zur Ausübung des erfindungsgemäßen Verfahrens geeignet ist. Die Schließeinheit 1 ist eine sogenannte Drei-Platten-Schließeinheit mit einer ortsfesten Formaufspannplatte 2, einer beweglichen Formaufspannplatte 3, sowie einer Abstützplatte 4. Mittels eines Antriebs 5, beipielsweise eines hydraulischen Antriebes mit Zylinder 6 und Kolben 7 kann die bewegliche Formaufspannplatte 3 auf die feste Formaufspannplatte 3 zu und von dieser wegbewegt werden.. Die bewegliche Formaufspannplatte ist an vier Holmen geführt, die sich zwischen der Absütztplatte 4 und der ortsfesten Formaufspanplatte erstrecken. In der Figur sind nur die vorderen Holme 8 und 9 zu sehen. Zwischen der beweglichen Formhälfte 10 und der ortsfesten Formhälfte 11 wird im geschlossenen Zustand, wie hier dargestellt, eine Formteilkavität 12 gebildet, in die ein durch die ortsfeste Formhälfte verlaufender Angusskanal 13 mündet. Die Einspritzeinheit 14 weist eine in einem Plastifizierzylinder 15 drehantreibbare und axial verschiebbare Plastifizierschnecke 16 auf. Für die Zuführung des Compounmaterials in den Plastifizierzylinder 15 ist eine Zwangsführung mittels eines Schneckenstopfers 17 vorgesehen. Dieser weist im wesentlichen einen rotierenden Einfülltrichter 18 auf, in dem eine Förderschnecke 19 drehantreibbar ist. Mittels eines ersten Antriebsmotors 20 wird die Förderschnecke 19 und mittels eines weiteren Antriebsmotors 21 wird der Einfülltrichter 18 drehangetrieben. Zu weiteren Einzelheiten des Schneckenstopfers 17 wird auf die Patentschriften DE 44 21 117 C2 und DE 37 12 828 C2 verwiesen. Auf diese Schriften wird in vollem Umfang Bezug genommen.

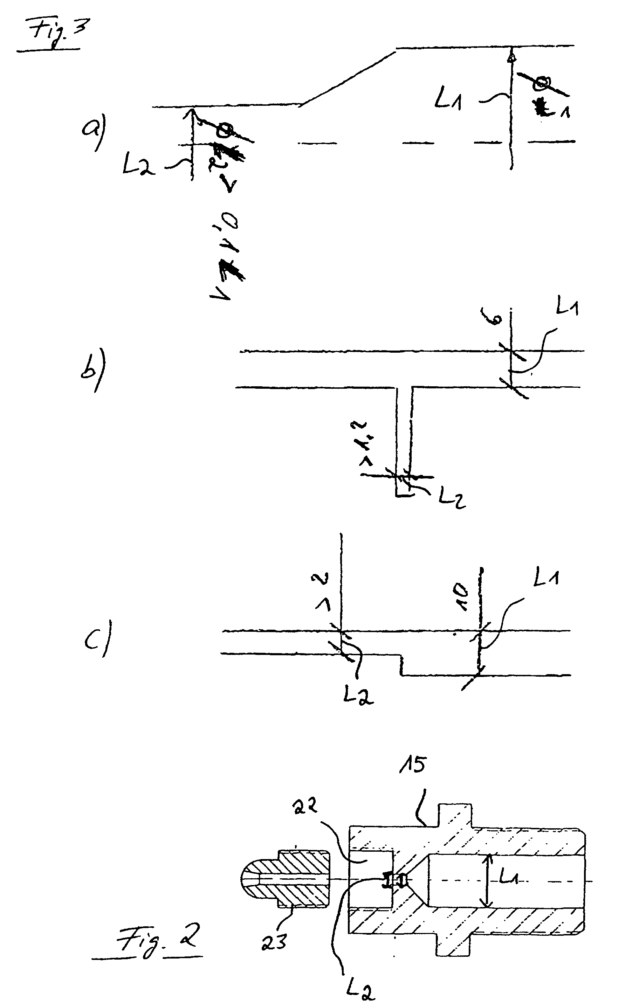

Figur 2 zeigt im Detail das vordere Ende des Plastifizierzylinders 15 mit einer Ausnehmung 22 zur Aufnahme der Düse 23.

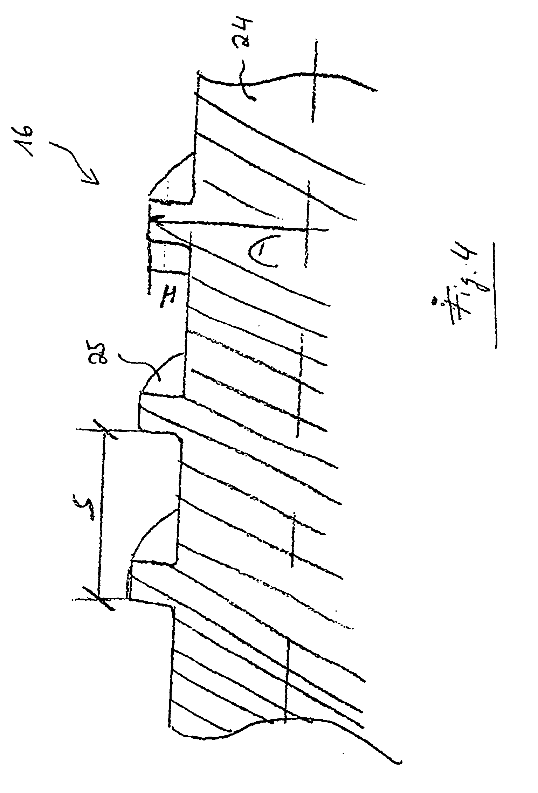

Auf dem gesamten Strömungsweg ist bei jeder einzelnen Querschnittsverjüngung eine Querschnittsabnahme von nicht mehr als 10:1, vorzugsweise von nicht mehr als 5:1, < vorgesehen. Gemäß Figur 2 soll also das Verhältnis von L₁ zu L₂ kleiner als 10, vorzugsweise kleiner als 5 sein. Auch beim Übergang vom Schneckenstopfer 17 in den Plastifzierzylinder 15 ist eine eventuelle Querschnittsverjüngung entsprechend auszugestalten. Figur 3 zeigt verschiedene Beispiele für Querschnittsverjüngungen mit der erfindungsgemäßen Querschnittsbnahme, wobei L₁ der größere und L₂ der kleinere (verjüngte) Querschnitt sind. Die Zahlenangaben sind relative Maße und können zum Beispeil in Zentimeter oder in Millimeter sein.

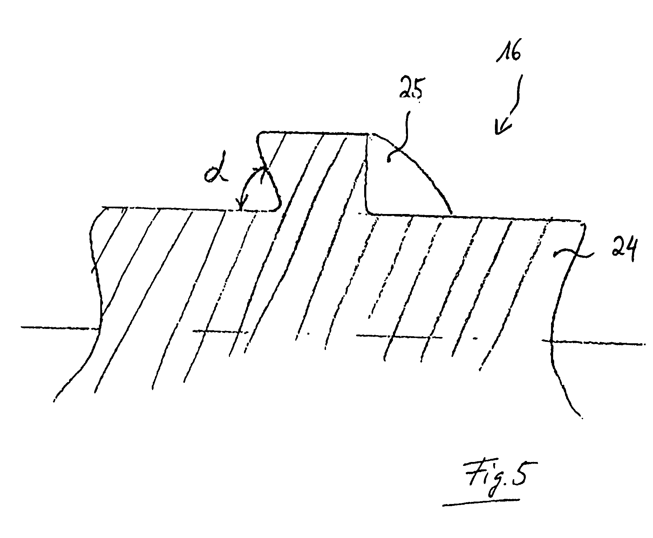

Figur 4 zeigt einen Querschnitt durch die Plastifizierschnecke 16 mit dem Schneckengrundkörper 24 und den Schneckenstegen 25. Die Steigung S ist der Abstand von Steg zu Steg in Achsrichtung der Plastifizierschnecke 16, während H die Höhe eines Schneckensteges 25 über der Oberfläche des Schneckengrundkörpers ist (= Gangtiefe). D ist der Durchmesser der Plastifizierschnecke 16. Für die Herstellung von Bipolarplatten ist eine Plastifizierschnecke günstig, deren Gangtiefe H mindestens ein Achtel, vorzugsweise ein Viertel des Schneckendurchmessers beträgt, d.h. H:D > 0.125 bis 0,25. Desweiteren hat es sich als günstig erwiesen, wenn eine Gangsteigung zwischen 0,5 und 1 vorgesehen wird, d.h. 0,5 ≤ S/D ≤ 1.

Figur 5 zeigt die Ausbildung der Plastifizierschnecke 16 mit einem negativen Winkel α der treibenden Flanke des Schneckensteges 25, d.h. α < 90°.

### Bezugszeichenliste

- 1: Schließeinheit
- 2: Ortsfeste Formaufspannplatte
- 3: Bewegliche Formaufspannplatte
- 4: Abstützplatte
- 5: Antrieb der beweglichen Formaufspannplatte
- 6: Zylinder
- 7: Kolben
- 8: Vorderer oberer Holm
- 9: Vorderer unterer Holm
- 10: Bewegliche Formhälfte
- 11: Ortsfeste Formhälfte
- 12: Formteilkavitat
- 13: Anguskanal
- 14: Einspritzeinheit
- 15: Plastifizierzylinder
- 16: Plastifizierschnecke
- 17: Schneckenstopfer
- 18: Rotierender Trichter
- 19: Förderschnecke
- 20: Antriebsmotor der Förderschnecke
- 21: Antriebsmotor des Trichters
- 22: Ausnehmung
- 23: Düse
- 24: Schneckengrundkörper
- 25: Schneckensteg

## Patentansprüche

1. Verfahren zum Herstellen von elektrisch leitfähigen Elektrodenkörpern, insbesondere Bipolarplatten für Brennstoffzellen, durch Spritzgießen aus einem Compoundmaterial, daß polymeren Kunststoff als Binder und ein pulverförmiges elektrisch leitfähiges Material wie Graphit, Kohle od. dgl. als Füllstoff enthält, mittels einer Spritzgießvorrichtung mit Plastifizierschnecke, **gekennzeichnet durch** folgende Merkmale:
- das verwendete Compoundmaterial enthält das pulverförmige, leitfähige Material wie Graphit od. dgl. zu mehr als 80 Gew.-%;
- die Plastifizierschnecke gibt das plastifizierte Material über eine Düse ab, deren Länge weniger als 15 mm beträgt
- das Spritzgießen wird mit einer Spritzgießeinrichtung durchgeführt, die auf dem gesamten Fließweg des Materials von der Materialzuführung bis zur Spritzgießform nur solche Verjüngungen aufweist, an denen sich der Strömungsquerschnitt um nicht mehr als 10:1, vorzugweise nicht mehr als 5:1, verringert.

2. Verfahren nach Anspruch 1, **dadurch gekennzeichnet, daß** eine Zwangszuführung des Compoundmaterials zu der Plastifizierschnecke mittels eines Schneckenstopfers mit rotierendem Zuführtrichter gemäß DE 47 21 117 C2 erfolgt.

3. Verfahren nach Anspruch 1 oder 2, **dadurch gekennzeichnet, daß** das Kompressionsverhältnis in der Plastifizierschnecke nicht mehr als 1,6:1 beträgt und bei der Verarbeitung von Duroplast zwischen 1:1,2 und 1:1 liegt.

4. Verfahren nach einem der Ansprüche 1 bis 3, **dadurch gekennzeichnet, daß** das Compoundmaterial der Plastifizierschnecke in solcher Dosierung zugeführt wird, daß deren Volumen zu nicht mehr als 90 %, vorzugsweise nicht mehr als 80 % gefüllt wird.

5. Verfahren nach einem der Ansprüche 1 bis 4, **dadurch gekennzeichnet, daß** eine Plastifizierschnecke verwendet wird, deren Gangtiefe mindestens ein Achtel, vorzugsweise mindestens ein Viertel des Schneckendurchmessers beträgt.

6. Verfahren nach einem der Ansprüche 1 bis 5, **dadurch gekennzeichnet, daß** eine Plastifizierschnecke mit einem negativen Winkel der treibenden Flanke verwendet wird.

7. Verfahren nach einem der Ansprüche 1 bis 6, **dadurch gekennzeichnet, daß** eine Plastifizierschnecke mit einer Gangsteigung zwischen 0,5 und 1 verwendet wird.

8. Verfahren nach einem der Ansprüche 1 bis 7, **dadurch gekennzeichnet, daß** die Formgebung der Elektroden in der Spritzgießform durch Spritzprägen erfolgt.

9. Verfahren nach einem der Ansprüche 1 bis 8, **dadurch gekennzeichnet, daß** die Oberflächenschicht der durch Spritzgießen bzw. Spritzprägen hergestellten Elektroden durch mechanische Bearbeitung, insbesondere Sandstrahlen, entfernt wird.

10. Verfahren nach einem der Ansprüche 1 bis 9, **dadurch gekennzeichnet , daß** die hergestellten Elektroden einer nachgeschalteten Temperaturbehandlung, insbesondere Temperung oder Sinterung, unterzogen werden.

## Claims

1. A method for the manufacture of electrically conductive electrode bodies, in particular bipolar plates for fuel cells, by injection moulding from a compound material, which contains polymeric synthetic material as the binder and a pulverent electrically conductive material such as graphite, carbon or the like as the filler, by means of an injection moulding apparatus having a plasticising screw,
**characterised by** the following features:
- the compound material used contains the pulverent conductive material such as graphite or the like at more than 80 % by weight;
- the plasticising screw discharges the plasticised material via a nozzle, the length of which is less than 15 mm;
- the injection moulding is carried out with an injection moulding apparatus, which over the entire flow path of the material from the material feed to the injection moulding mould comprises only tapers at which the cross section of flow decreases by not more than 10:1, preferably not more than 5:1.

2. A method according to Claim 1 or 2,
**characterised in that** the restricted guidance of the compound material to the plasticising screw takes place by means of a screw stopper with rotating feed funnel as specified by DE 47 21 117 C2.

3. A method according to Claim 1 or 2,
**characterised in that** the compression ratio in the plasticising screw is not more than 1.6: 1 and during the processing of thermosetting plastic lies between 1:1.2 and 1:1.

4. A method according to one of Claims 1 to 3,
**characterised in that** the compound material of the plasticising screw is supplied at such a dosage that its volume is filled to not more than 90 %, preferably not more than 80 %.

5. A method according to one of Claims 1 to 4,
**characterised in that** a plasticising screw is used, the thread depth of which is at least one eighth, preferably at least one quarter, of the screw diameter.

6. A method according to one of Claims 1 to 5,
**characterised in that** a plasticising screw having a negative angle of the driving edge is used.

7. A method according to one of Claims 1 to 6,
**characterised in that** a plasticising screw with a lead of between 0.5 and 1 is used.

8. A method according to one of Claims 1 to 7,
**characterised in that** the shaping of the electrodes takes place in the injection moulding mould by injection compression moulding.

9. A method according to one of Claims 1 to 8,
**characterised in that** the surface layer of the electrode produced by injection moulding or injection compression moulding is removed by machining, in particular by sandblasting.

10. A method according to one of Claims 1 to 9,
**characterised in that** the manufactured electrodes are subjected to a downstream temperature treatment, in particular annealing or sintering.

## Revendications

1. Procédé pour la fabrication de corps d'électrodes conducteurs d'électricité, en particulier de plaques bipolaires pour des cellules de combustible, par moulage par injection d'un matériau compound qui contient une matière plastique polymère comme liant et un matériau conducteur d'électricité en forme de poudre comme du graphite, du carbone ou similaire comme matériau de remplissage, au moyen d'un dispositif de moulage par injection avec vis de plastification, **caractérisé en ce que**:
- le matériau compound utilisé contient le matériau conducteur en forme de poudre comme le graphite ou similaire à plus de 80% ;
- la vis de plastification livre le matériau plastifié par une buse dont la longueur s'élève à moins de 15 mm ;
- le moulage par injection est effectué avec un dispositif de moulage par injection qui présente seulement sur tout le parcours du matériau, de l'alimentation jusqu'au moule, des rétrécissements tels, qu'à leur endroit la coupe transversale du flux ne se réduit pas plus de 10:1, de préférence pas plus de 5:1.

2. Procédé selon la revendication 1, **caractérisé en ce qu'**un guidage forcé du matériau compound vers la vis de plastification s'effectue au moyen d'un dispositif de bourrage de la vis avec entonnoir rotatif selon DE 47 21 117 C2.

3. Procédé selon la revendication 1 ou 2, **caractérisé en ce que** le rapport de compression dans la vis de plastification ne s'élève pas à plus de 1,6:1 et pour le traitement de plastique thermodurcissable se relève entre 1:1,2 et 1:1.

4. Procédé selon l'une quelconque des revendications 1 à 3, **caractérisé en ce que** le matériau compound de la vis de plastification est alimenté à un dosage tel que le volume de celle-ci ne doit pas être rempli à plus de 90%, de préférence pas plus de 80%.

5. Procédé selon l'une quelconque des revendications 1 à 4, **caractérisé en ce qu'**une vis de plastification est utilisée, dont la profondeur de passage s'élève à au moins un huitième, de préférence à au moins un quart du diamètre de la vis.

6. Procédé selon l'une quelconque des revendications 1 à 5, **caractérisé en ce qu'**est utilisée une vis de plastification avec un angle négatif des flancs propulseurs.

7. Procédé selon l'une quelconque des revendications 1 à 6, **caractérisé en ce qu'**est utilisée une vis de plastification avec un pas situé entre 0,5 et 1.

8. Procédé selon l'une quelconque des revendications 1 à 7, **caractérisé en ce que** le moulage des électrodes dans le moule de moulage par injection s'effectue par estampage par injection.

9. Procédé selon l'une quelconque des revendications 1 à 8, **caractérisé en ce que** la couche de surface des électrodes fabriquées par moulage par injection ou estampage par injection est enlevée par traitement mécanique, en particulier par sablage.

10. Procédé selon l'une quelconque des revendications 1 à 9, **caractérisé en ce que** les électrodes fabriquées sont soumises à un traitement thermique situé en aval, en particulier par recuit ou frittage.
